# EUROPEAN PATENT APPLICATION

(11) **EP 1 727 309 A1**
(43) Date of publication of application: **29.11.2006**
(21) Application number: 06300523.5
(22) Date of filing: 29.05.2006
(51) Int. Cl.: H04L 12/24, H04L 12/26, H04L 29/08

(54) **Methods and apparatus for monitoring link integrity for signaling traffic over a path traversing hybrid ATM/ethernet infrastructure in support of packet voice service provisioning**

(30) Priority: 27.05.2005 US 138795
(71) Applicant: Alcatel, 75008 Paris (FR)
(72) Inventor: Huang, Bill Y., Nepean Ontario K2G 5V9 (CA); Barrett, Chris R., Nepean Ontario K2G 6C4 (CA)
(74) Representative: Hervouet, Sylvie

(57) **Abstract**

Methods and apparatus improving availability of voice services controlled via IP signaling links provisioned over converged ATM and Ethernet converged network infrastructure are provided. A media gateway network element implements a Layer-2 signaling link end-to-end monitoring via heartbeat messages formulated at the ATM end to traverse the converged network infrastructure to the Ethernet end. The media gateway is provided with SPVC connectivity information and is made aware of network bridging in order to perform a Layer-2 switchover to a standby signaling link in reestablishing signaling link connectivity with a media gateway controller should a communications fault be detected. The advantages include codcploymcnt with previous media gateway controller implemented techniques, and providing a reduction of overheads for media gateway controller implemented techniques while increasing availability by reducing exposure to service outages.

## Description

### Field of the invention

The invention relates to connectivity monitoring across converged packet-switched communications networks, and in particular to monitoring Internet Protocol (IP) link integrity over a hybrid path traversing Asynchronous Transfer Mode (ATM) and Ethernet packet-switched infrastructure of converged communications networks.

### Background of the invention

In the field of packet-switched communications there is a need to ensure end-to-end link connectivity. For services, such as packet voice services provisioned over a converged ATM/Ethernet network infrastructure, link connectivity monitoring is important specifically for IP links employed in conveying signaling traffic.

Recently, particular importance has been given to the use of the H.248 Megaco protocol for conveying signaling traffic between a Media Gateway (MG) and a Media Gateway Controller (MGC) network elements in support of packet voice applications. The H.248 protocol provides a framework enabling an MGC to control multiple redundant MGs. The H.248 Megaco protocol is described in RFC3015 published on the Internet by the Internet Engineering Task Force (IETF) at www ietf.org/rfc/rfc3015.txt, and is incorporated herein by reference. MGs convert the format of media content received from one type of network to a format suitable for transmission over another type of network. For packet voice applications, MGs are employed to terminate bearer channels (e.g., DS0s), typically provisioned over the distribution portion of a circuit-switched network, and media streams from a packet-switched network such as, but not limited to, Real-Time Transport Protocol (RTP) streams provisioned over an IP network. MGs are intended for use in processing audio, video and T.120 media content streams alone or in any combination, and capable of performing full duplex media content translation MGCs control portions of the call connection that pertain to connection control for media channels in a MG.

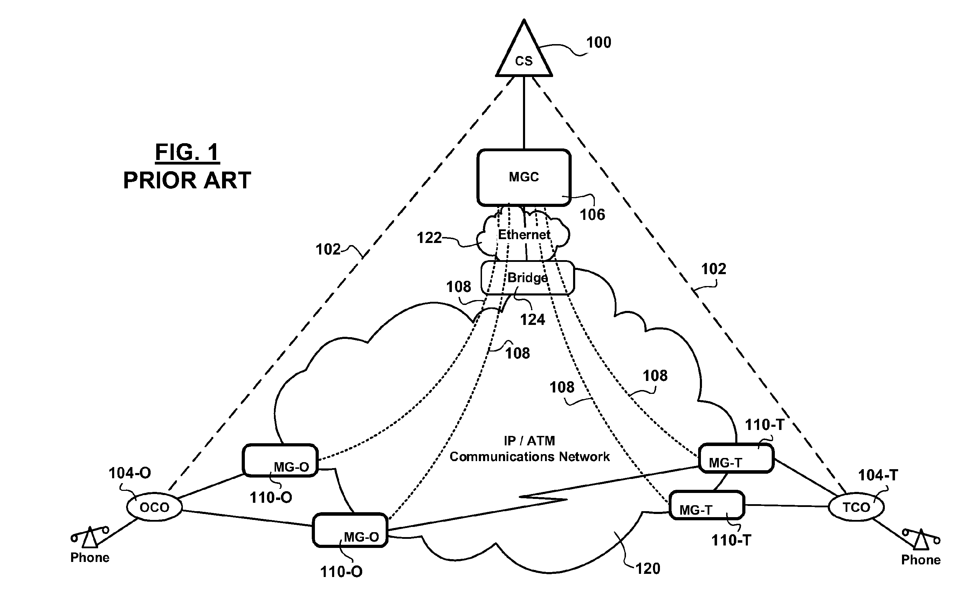

FIG.1 shows an exemplary deployment of packet-switched communications network infrastructure employed in provisioning packet voice services. At the top of the connectivity hierarchy is a Call Server (CS) entity 100, a class 4 switch, with logical signaling links 102 to class 5 Central Office (CO) switches 104 such as an Originating Central Office (OCO) 104-O and a Terminating Central Office (TCO) 104-T using Signaling System 7 signaling. In provisioning voice services over a packet-switched communications network infrastructure, the CS 100 uses an associated MGC 106 which employs the H.248 protocol to communicate over signaling links 108, also known as media gateway signaling links, with corresponding redundant Originating MGs (MG-O) 110-O and redundant Terminating MGs (MG-T) 110-T.

In accordance with typical prior art approaches, MGC 106 regularly polls each signaling connection defined by a pair of signaling links 108 to corresponding redundant MGs 110, to detect signaling link failures. Failing to confirm connectivity over the active signaling link 108, the MGC 106 performs a switchover to the backup signaling link 108 of the pair. The polling frequency for large numbers of MGs 110 varies inversely with the number of MGs 110 deployed, thereby leading to scalability problems.

Typically, in the event that the MGC 106 fails to detect the signaling link failure affecting a signaling link 108, failure detection and switchover would be handled at the application layer, wherein the CS 100 coordinates heartbeat monitoring with the COs 104 over logical signaling links 102.

Due to very high connection densities, high bandwidths, and high availability requirements, every moment counts when it comes to detecting and taking the necessary steps to recover from failure. It would be advantageous to detect and recover from such failures as quickly as possible. However, the centralized link failure detection performed by the MGC 106 and the centralized heartbeat monitoring performed by the CS 100, become increasingly inadequate as the number of MGs 110 deployed in the packet-switched communications network 120 increases, the MGC 106 / CS 100 having to devote significant operational resources to connectivity monitoring.

It is apparent that in accordance with the prior art centralized connectivity monitoring provided, the MGC 106 / CS 100 represents a single point of failure. An outage affecting the MGC 106 / CS 100, impacts all MGs 110 registered therewith Therefore practical deployments require the use of redundant MGC 106 / CS 100 (not shown). Typically, because of the poor scalability performance described above, more than two MGC 106 / CS 100 are used.

Another relevant issue, relates to network management wherein it is highly desired that network elements such as MGCs 106 / CS 100 employed by the service provider to provisioning packet voice services, connect to an Ethernet management network 122 which introduces compatibility issues as typically the core of the packet-switched communications network provisioning packet-voice services 120 is an ATM network. Using Ethernet in the management network 122 provides cost advantages particularly in view of the recent rapid development and deployment of new services, while the use of ATM payload transport in the service provider's network 120 provides high bandwidth and high service quality advantages. At least one bridge 124 is used to provide interconnectivity between the Ethernet management network 122 and the ATM transport network 120. The bridge 124 provides interoperability by employing the Internet Protocol (IP) at the network layer on both sides of the bridge 124. The interconnectivity and interoperability between Ethernet and ATM networks, which have been, are, and continue to be the subject of intense research and development is referred to as convergence, while such hybrid deployments are referred to as convergent applications.

Service providers are looking for convergent solutions to packet voice applications; because of the disparate technologies employed in the management and the transport networks, ensuring availability is becoming increasingly important. Service providers are looking for ways to ensure a high level of availability of convergent applications and therefore there is a need to address the above mentioned issues.

### Summary of the invention

In accordance with an aspect of the invention, a method of monitoring signaling link viability from a media gateway for a multitude of signaling links between the media gateway and a multitude of media gateway controllers is provided. The method includes a sequence of steps. A heartbeat message destined for a selected one of the multitude of media gateway controllers is formulated. The heartbeat message is sent towards the media gateway controller via a selected one of the multitude of signaling links. The viability of the signaling link is ascertained based on whether the heartbeat message is returned. And, a different standby signaling link is selected if the currently selected signaling link is no longer viable.

In accordance with another aspect of the invention, a media gateway providing interworking between circuit-switched channels and packet voice media streams provisioned over a packet-switched communications network is provided. The media gateway is controlled by one of a multitude of redundant media gateway controllers via a corresponding signaling connection. Each signaling connection is provisioned over redundant signaling links over a packet-switched communications infrastructure. The media gateway includes a signaling link lookup table for storing, in a multitude of signaling link table entries, signaling link connectivity information in respect of a multitude of redundant signaling links, each signaling link table entry further specifying one of the multitude of redundant media gateway controllers. The media gateway also includes a heartbeat message generator for generating a heartbeat message destined for a selected one of the multitude of redundant media gateway controllers. The media gateway further includes transmission means for sending the heartbeat message towards the selected media gateway controller via a selected signaling link. The media gateway further includes reception means for receiving heartbeat messages from the selected media gateway controller via the selected signaling link. And, the media gateway controller further includes media gateway logic for selecting another signaling link from the multitude of signaling links should a sent heartbeat message not be received.

In accordance with a further aspect of the invention, a system for monitoring signaling link viability for a multitude of signaling links between a multitude of media gateways and a multitude of media gateway controllers is provided. Each media gateway includes a signaling link lookup table having a multitude of signaling link table entries, and heartbeat message generator for generating OSI Layer-2 heartbeat messages employing signaling link connectivity information held in a selected one of the multitude of signaling link table entries. Each media gateway also includes transmission means for sending the heartbeat message via a signaling link corresponding to the selected signaling link table entry towards a corresponding media gateway controller specified in the selected signaling link table entry, and reception means for receiving the heartbeat message via the signaling link. And, the media gateway further includes media gateway logic for selecting another signaling link from the multitude of signaling links specified in the multitude of signaling link table entries should a sent heartbeat message not be received. Each media gateway controller includes at least one input port configured to reply to each heartbeat message.

Accordingly, while the media gateway can, in accordance with the exemplary embodiment of the invention described herein, perform connectivity monitoring of signaling links, the media gateway may also continue to perform connectivity monitoring however only as necessary since the stringent requirement of a short polling cycle is relaxed allowing the number of media gateways deployed to be less dependent on the processing bandwidth of the media gateway controller.

Accordingly, an improved Layer-2 fault detection and signaling link switchover method has been presented which increases service availability above current service availability levels.

### Brief description of the drawings

The features and advantages of the invention will become more apparent from the following detailed description of the exemplary embodiment(s) with reference to the attached diagrams wherein:
FIG. 1 is a network diagram showing cooperating convergent network elements employed in provisioning packet voice services over a packet-switched communications network;
FIG. 2 is a network diagram showing cooperating convergent network elements employed, in accordance with an exemplary embodiment of the invention, in provisioning packet voice services using a convergent packet-switched communications network signaling infrastructure at an improved level of service availability;
FIG. 3 is an exemplary signaling link connectivity information lookup table employed in accordance with the exemplary embodiment of the invention to provide an improved level of service availability for packet voice services employing signaling provisioned over a convergent communications network infrastructure;
FIG. 4 is a flow diagram showing, in accordance with the exemplary embodiment of the invention, steps performed by a media gateway actively monitoring hybrid connectivity to a media gateway controller; and
FIG. 5 is an exemplary state diagram of a signaling link.

It will be noted that in the attached diagrams like features bear similar labels.

### Detailed description of the embodiments

It is recognized that given the mean failure rate of deployed equipment, even if centralized failover functionality is employed in accordance with prior art practices at the Media Gateway Controller (MGC), increasing the level of availability is dependent on the detection of infrastructure failure as fast as possible. In particular, prior art deployments typically quote a level of 99.99% availability, in order to increase this level ten fold to 99.999% availability, faster signaling link failure detection and faster initiation of signaling link switchover to a standby signaling link is required.

It is realized that service availability in packet voice applications, operator assisted calls aside, is largely predicated on the ability of a MG 110 to connect to an MGC 106 at the control layer to convey service connection setup messages in order for service connectivity to be established at the application layer. It is too late for an MGC 106 to realize that it can no longer receive service requests nor send control messages to a particular MG 110, because, since the last polling cycle, the corresponding CO 104 may have been unsuccessfully requesting the services of the CS 100.

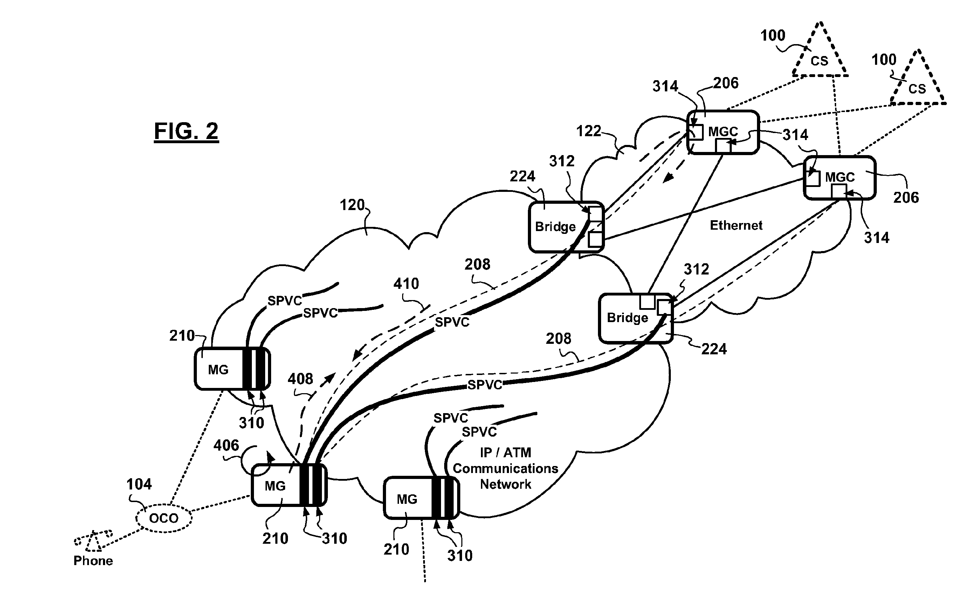

In accordance with an exemplary embodiment of the invention, a distributed Layer-2 heartbeat monitoring technique is provided, wherein multiple deployed MGs 210 are adapted to perform distributed signaling link connectivity monitoring in parallel, as shown in FIG. 2.

In accordance with the exemplary embodiment of the invention, MGs 210 register with multiple MGCs 206, and at least with a primary and a secondary MGC 206. In accordance with the exemplary embodiment of the invention, signaling link monitoring and switchover on failure is performed in a distributed fashion by each MG 210 at Layer-2 based on the success of receiving (410) heartbeat messages previously sent by the MG 210.

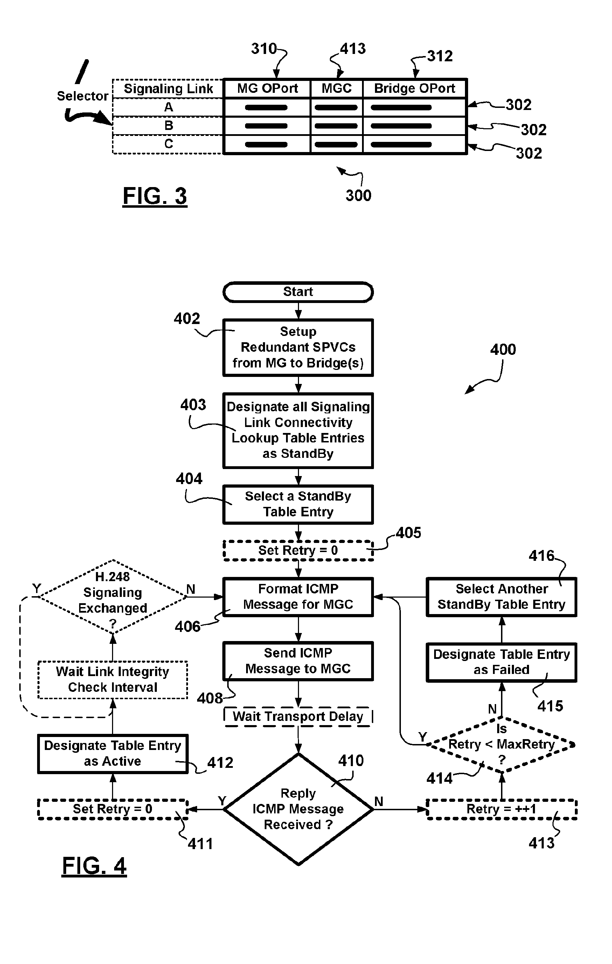

In accordance with the exemplary embodiment of the invention, each MG 210 is provided with a signaling link connectivity information lookup table 300 exemplary shown in FIG. 3, storing signaling link provisioning information for at least two redundant signaling links 208. Each signaling link lookup table entry 302 includes:
- an originating interface specification 310, typically a network address specification, of a corresponding core-side interface of the MG 210, typically a trunk port, on which a Switched Permanent Virtual Circuit (SPVC) signaling link originates in the uplink direction;
- optionally an outgoing interface identifier 312, typically, but not limited to, a port specification, on one of a redundant group of bridges 224, of an interface to the management network 122 on which the SPVC signaling link terminates in the uplink direction; and
- an MGC 206 identifier 314, typically, but not limited to, a fully qualified host name or a network address, in accordance with the exemplary embodiment of the invention, each redundant MGC 206 having redundant connections to the Ethernet management network 122 therefore being addressed redundantly via a pair of redundant identifiers 314.
Redundancy is ensured to the extent to which entry fields 310, 312, and 314; or the entries 302 are unique - fully redundant signaling links 208 employing different physical network elements on both the ATM transport network 120 and Ethernet management network 122.

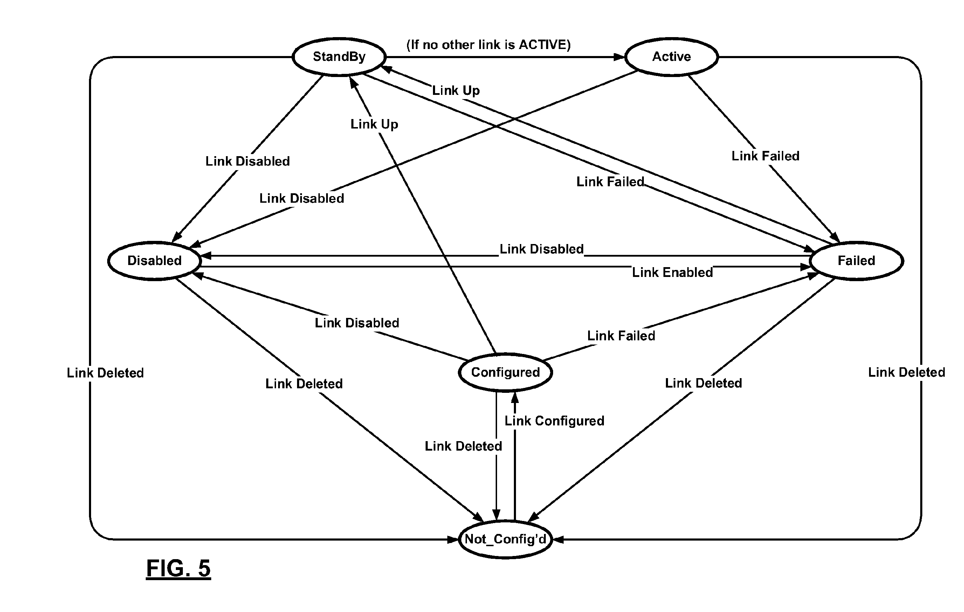

Making reference to FIG. 4, at setup, the entries 302 of the signaling link lookup table 300 are consulted to establish 402 at least a pair of redundant SPVCs between an MG 210 and a corresponding pair of bridges 224. For example the first signaling link lookup table entry 302 corresponds to the default active signaling link 208 and the second signaling link lookup table entry 302 corresponds to the default standby signaling link 208. Respective portions of the signaling links 208 traverse the ATM transport network 120 are carried over the SPVCs.

Failure of transport network 120 infrastructure between the MG 210 and each bridge 224 is detected by the ATM network 120, and addressed by autonomous rerouting the SPVCs within the ATM network 120.

Failure of the originating interface (310) of each SPVC at the MG 210, failure of the bridge 224 proper, failure of the outgoing interface (312), and/or of the specified (314) MGC 206 are addressed, in accordance with the exemplary embodiment of the invention, via the Layer-2 heartbeat monitoring as exemplary shown in FIG.4. In accordance with the exemplary embodiment of the invention, heartbeat monitoring is initiated at the ATM side of the signaling link 208, the MG 210 formulating 406 and sending 408 an Internet Control Message Protocol (ICMP) echo message to traverse both the ATM transport network 120 and Ethernet management network 122 via the specified interfaces, to arrive at the specified 314 MGC 206 to which the Ethernet side of the signaling link 208 connects. The ICMP protocol is employed for conveying control and error messages used to manage the behavior of the Internet protocol stack. The ICMP protocol is defined in RFC 792 and RFC 950 published by the IETF on the Internet at www.ietf.org/rfc/rfc792.txt and www.ietf.org/rfc/rfc950, both of which are incorporated herein by reference.

In accordance with the exemplary embodiment of the invention, MGC 206 interfaces 314 are configured to return each echo message upon receipt without intervention of the MGC 206 itself, the MGC 206 proper being relived of intensive ICMP echo message return processing. For greater certainty, the MGC 206 proper is unaware of the signaling link connectivity monitoring performed by MGs 210. The MGC 206 becomes aware of whether an MG 210 relies thereupon for signaling through MG 210 registration therewith, and as signaling is received from the MG 210. Incidentally, while the MGC 206 proper is not actively involved in returning the ICMP echo messages to the MG 210 at the link layer, successful registration with the MGC 206 and continued successful exchange of H.248 messages between the MG 210 and the MGC 206 at the application layer provide an indication to the MGC 206 that the MC 210 is operational, otherwise that a switchover at the MGC 206 would be in order.

Repeating process steps 406, 408, and 410 periodically after a link integrity check interval provides a Layer-2 heartbeat for monitoring end-to-end signaling link 208 connectivity over the convergent deployment. Persons of ordinary skill in the art understand the propagation of heartbeat messages between the MG 210 and the MGC 206 is not instantaneous. In accordance with an exemplary implementation of the exemplary embodiment of the invention, a transit delay register is employed by the MG 210 to specify a time duration during which a sent heartbeat message is respected to be received at the MG 210.

In the event that the ICMP echo message sent in accordance with the signaling link provisioning information specified in the first signaling link lookup table entry 302 fails 410 to be returned to the MG 210, the MG 210 autonomously performs a switchover to a standby signaling link 208 by employing 416 signaling link provisioning information specified in another signaling link lookup table entry 302 thereby ensuring end-to-end connectivity through the convergent deployment. In practice however, considering the fact that the IP protocol does not guarantee successful transport end-to-end, the switchover 416 is delayed until a MaxRetry number of sent ICMP echo messages, for example two, are not received. The MG 210 tracks the number of retries in a retry register.

In accordance with the exemplary embodiment of the invention, should the services of a CS 100 be required, service connection setup and teardown messages are sent by the MG 210 over the signaling link 208 via which the Layer-2 heartbeat messages are successfully (412) being sent 408 and returned 410.

Making reference to FIG. 4, in accordance with an exemplary implementation of the exemplary embodiment of the invention, the OSI Layer-2 monitoring process 400 is performed only when application layer H.248 messages have not been exchanged between the MG 210 and MGC 206 for a period of time, thereby reducing the introduced overhead to the minimum necessary. In accordance with another exemplary implementation of the exemplary embodiment of the invention, the link integrity check interval is adjustable, the interval being adjusted based on relevant statistical variables affecting the service availability. In accordance with an exemplary implementation of the exemplary embodiment of the invention, the link integrity check interval, which also corresponds to a monitoring frequency, is specified at the MG 210 via a register.

It was mentioned above that the level of redundancy provided is dependent on the degree to which the signaling link entries 302 are unique. Whenever the same interface 310 or 312 is used in multiple entries 302 for the same signaling connection 102, redundancy is reduced and therefore availability is reduced as that common interface associated with the corresponding signaling links 208 represents a common point of failure for the same signaling connection 102. While redundant engineered SPVCs following disparate paths in the ATM transport network 120 can be controllably provisioned, the nature of packet switching in the Ethernet management network 122 requires careful selection of MGCs 206 specified in the entries 302 in order to ensure adequate redundancy via the provisioning redundant Ethernet signaling links following disparate paths. Added redundancy is provided by multiply connecting each MGC 206 to the management network 122 via multiple interfaces (314).

In view of the fact that each MG 210 can only be registered with a single MGC 206 and in view of the fact that the registration process is not instantaneous, the multitude of entries 302 may be employed to delay the need for incurring MGC registration overheads by specifying multiple redundant signaling links 208 to each of a group redundant MGCs 206. For brevity, steps registering the MG 210 with an MGC 206 are not show in FIG.4 however the information in the signaling link configuration information table 300 is also used for this purpose. However, redundancy is reduced when multiple entries 302 exclusively specify the same MGC 206, and therefore availability is reduced as the specified MGC 206 represents a common point of failure for a given signaling connection 102.

In the above description, it was assumed for brevity that the first signaling link lookup table entry 302 corresponds to the active signaling link 208, the second entry 302 corresponding to the standby signaling link 208. The invention is not limited to such an assumption. In accordance with an exemplary implementation of the exemplary embodiment of the invention, at setup, after the SPVCs are established, the MG 210 may perform a selection process which sends Layer-2 heartbeat messages, as described above, in respect of each entry 302, the signaling link 208 corresponding to the first returned heartbeat message becoming (412) the active signaling link 208.

For greater certainty, while process 400 concentrates on selecting a viable signaling link 208, parallel processes pace each signaling link 208, as any other SPVC, through a series of states in accordance with network conditions and configuration/management steps including the raising and clearing of alarms as appropriate. An exemplary state diagram is shown in FIG. 5.

Therefore, in accordance with the exemplary embodiment of the invention, the MG 210, typically an ATM network element, is adapted to formulate, convey and receive ICMP echo messages intended to traverse both the ATM transport network 120 and the Ethernet management network 122. The MG 210 and bridge 224 implement RFC 1483 and RFC 2684 as appropriate, both published by the IETF on the Internet at www.ietf.org/rfc/rfc1483.txt, and www.ietf.org/rfc/rfc2684.txt and are incorporated herein by reference.

Accordingly, while the MG 210 can, in accordance with the exemplary embodiment of the invention described herein, perform all necessary connectivity monitoring of signaling links 208, the MGC 206 may also continue to perform connectivity monitoring however only as required since the stringent requirement of a short polling cycle is relaxed allowing the number of MGs 210 deployed to be less dependent on the processing bandwidth of the MGC 206.

Accordingly, an improved Layer-2 fault detection and signaling link switchover method has been presented which improves service availability above current service availability levels.

For greater certainty, as the process 400 relates to signaling link 208 monitoring and switchover, all service call connections already established over the transport network 120 between originating and terminating CO 104 pairs are unaffected by signaling link switchovers, and service call connection control is independent of which one of the redundant signaling links 208 is employed. It is understood that at least two redundant MGs 210 are associated with each CO 104.

The embodiments presented are exemplary only and persons skilled in the art would appreciate that variations to the above described embodiments may be made without departing from the spirit of the invention. The scope of the invention is solely defined by the appended claims.

## Claims

1. A method of monitoring signaling link viability from a media gateway for a plurality of signaling links between the media gateway and a plurality of media gateway controllers, the method comprising:
a. formulating a heartbeat message destined for a selected one of the plurality of media gateway controllers;
b. sending the heartbeat message towards the media gateway controller via a selected one of the plurality of signaling links;
c. ascertaining the viability of the signaling link based on whether the heartbeat message is returned; and
d. selecting a different standby signaling link if the currently selected signaling link is no longer viable.

2. A method as claimed in claim 1, wherein each signaling link is provisioned over a hybrid communications infrastructure, the media gateway being an edge node of a transport network and each media gateway controller being a node in a management network associated with the transport network, and signaling link provisioning information being held at the media gateway in a signaling link lookup table, wherein formulating the heartbeat message the method further comprises: consulting the signaling link lookup table in selecting the media gateway controller.

3. A method as claimed in claim 2, wherein the signaling link lookup table further comprises a plurality of signaling link table entries, each signaling link table entry specifying signaling link provisioning information, wherein formulating the heartbeat message the method further comprises:
a. selecting a signaling link table entry from the plurality of signaling link table entries; and
b. consulting the selected signaling link table entry in selecting the media gateway controller.

4. A method as claimed in claim 3, further comprising pre-provisioning each SPVC corresponding to each signaling link specified in the signaling link lookup table.

5. A method as claimed in claim 4, wherein selecting a signaling link, the method further comprises:
a. formulating a plurality of heartbeat messages corresponding to the plurality of signaling link table entries, each heartbeat message being destined for the media gateway controller specified in the corresponding signaling link entry;
b. sending each heartbeat message towards the respective media gateway controller via the signaling link specified in the corresponding signaling link entry;
c. selecting a signaling link based on the first received heartbeat message.

6. A method as claimed in claim 2, wherein each signaling link is provisioned over a convergent communication network infrastructure, the media gateway being an edge node of an ATM transport network and each media gateway controller being a node in an Ethernet management network, each signaling link table entry specifying provisioning information for a Switched Permanent Virtual Circuit (SPVC) between the media gateway and a bridge network element between the ATM transport network and the Ethernet management network, wherein sending the heartbeat message towards the media gateway controller via the selected signaling link the method further comprises: sending the heartbeat message over the corresponding SPVC.

7. A method as claimed in claim 6, wherein selecting the signaling link, the method further comprises: provisioning each SPVC corresponding to each signaling link based on provisioning information specified in the corresponding signaling link lookup table entry.

8. A method as claimed in claim 7, wherein provisioning the SPVC, the method further comprises: provisioning the SPVC between a core-side interface on the media gateway and a management-network-side interface on the bridge.

9. A method as claimed in claim 6, wherein each heartbeat message sent is an ICMP echo request message destined for the selected media gateway controller, the method further comprises: encapsulating the ICMP echo request message with an ATM header specifying the use of the SPVC corresponding to the selected signaling link for transport thereof in the ATM transport network.

10. A method as claimed in claim 1, further comprising: registering the media gateway with the media gateway controller subsequent to the first successful receipt of a heartbeat message following the selection of the signaling link.

11. A method as claimed in claim 1, wherein selecting a different standby link, the method further comprises: determining that the heartbeat message was not returned within a specified period of time since the heartbeat message was sent allowing for heartbeat message propagation delays.

12. A method as claimed in claim 1, wherein selecting a different standby link, the method further comprises: determining that no heartbeat messages have been returned following at least two retries.

13. A method as claimed in claim 1, wherein ascertaining that the signaling link is viable, the method further comprises: designating the signaling link table entry as being associated with an active signaling link.

14. A method as claimed in claim 1, wherein ascertaining that the signaling link is no longer viable, the method further comprises:
designating the signaling link table entry as being associated with a failed signaling link.

15. A method as claimed in claim 1, further comprising: monitoring the selected signaling link by repeating the heartbeat message formulating, the heartbeat message sending, and the ascertaining steps.

16. A method as claimed in claim 15, wherein monitoring the signaling link, the method further comprises: periodically repeating the heartbeat message formulating, the heartbeat message sending, and the ascertaining steps at a specified monitoring frequency.

17. A method as claimed in claim 16, further comprising: adjusting the monitoring frequency.

18. A method as claimed in claim 15, wherein monitoring the signaling link, the method further comprises: selectively repeating the heartbeat message formulating, the heartbeat message sending, and the ascertaining steps only in the absence of signaling traffic being exchanged in either direction between the media gateway and the media gateway controller.

19. A media gateway providing interworking between circuit-switched channels and packet voice media streams provisioned over a packet-switched communications network, the media gateway being controlled by one of a plurality of redundant media gateway controllers via a corresponding signaling connection, each signaling connection being provisioned over redundant signaling links over a packet-switched communications infrastructure, the media gateway comprising:
a. a signaling link lookup table for storing, in a plurality of signaling link table entries, signaling link connectivity information in respect of a plurality of redundant signaling links, each signaling link table entry further specifying one of the plurality of redundant media gateway controllers;
b. a heartbeat message generator for generating a heartbeat message destined for a selected one of the plurality of redundant media gateway controllers;
c. transmission means for sending the heartbeat message towards the selected media gateway controller via a selected signaling link;
d. reception means for receiving heartbeat messages from the selected media gateway controller via the selected signaling link; and
e. media gateway logic for selecting another signaling link from the plurality of signaling links should a sent heartbeat message not be received.

20. A media gateway as claimed in claim 19, wherein the media gateway is employed to provide interworking between channels provisioned via a class 5 switch and packet voice media streams provisioned over an Asynchronous Transfer Mode (ATM) transport network, while each signaling link is provisioned via a hybrid packet-switched communications infrastructure, the signaling link lookup table further comprising: a plurality of signaling link table entries, each signaling link table entry specifying a Switched Permanent Virtual Circuit (SPVC) for provisioning a signaling link therethrough over the ATM transport network, each signaling link table entry further specifying a media gateway controller address of one of the plurality of media gateway controllers attached to an Ethernet management network, the media gateway controller being associated with a class 4 switch

21. A media gateway as claimed in claim 20, each signaling link table entry further specifying an interface address of a plurality of redundant interface addresses of the media gateway controller.

22. A media gateway as claimed in claim 20, wherein each SPVC traverses the ATM transport network between the media gateway, and one of a plurality of bridges between the ATM transport network and an Ethernet management network, each signaling link table entry specifying SPVC endpoints.

23. A media gateway as claimed in claim 22, each SPVC endpoint specification comprising one of a network address and a port specification.

24. A media gateway as claimed in claim 22, each signaling link table entry specifying one of a core- side interface on the media gateway and a management-network-side interface on the bridge.

25. A media gateway as claimed in claim 19, further comprising a retry register specifying a current number of un-received heartbeat messages.

26. A media gateway as claimed in claim 19, further comprising a repeat interval register specifying a period of time between successive heartbeat messages sent.

27. A media gateway as claimed in claim 19, further comprising a transit delay register specifying a transit delay time allowed to elapse since the last heartbeat message was sent before determining that a heartbeat message was not received.

28. A system for monitoring signaling link viability for a plurality of signaling links between a plurality of media gateways and a plurality of media gateway controllers,
a. each media gateway comprising:
i. a signaling link lookup table having a plurality of signaling link table entries;
ii. a heartbeat message generator for generating OSI Layer-2 heartbeat messages employing signaling link connectivity information held in a selected one of the plurality of signaling link table entries;
iii. transmission means for sending the heartbeat message via a signaling link corresponding to the selected signaling link table entry towards a corresponding media gateway controller specified in the selected signaling link table entry,
iv. reception means for receiving the heartbeat message via the signaling link; and
v. media gateway logic for selecting another signaling link from the plurality of signaling links specified in the plurality of signaling link table entries should a sent heartbeat message not be received; and
b. each media gateway controller comprising at least one input port configured to reply to each heartbeat message.

29. A system as claimed in claim 28, wherein each heartbeat message is an Internet Control Message Protocol (ICMP) echo message.

30. A system as claimed in claim 28, wherein each media gateway is employed to provide interworking between channels provisioned via a class 5 switch and packet voice media streams provisioned over an Asynchronous Transfer Mode (ATM) transport network, while each signaling link is provisioned via a hybrid packet-switched communications infrastructure, each signaling link table entry specifying a Switched Permanent Virtual Circuit (SPVC) for provisioning a signaling link therethrough over the ATM transport network, each signaling link table entry further specifying a media gateway controller address of one of the plurality of media gateway controllers attached to an Ethernet management network, the media gateway controller being associated with a class 4 switch
